Europäisches Patentamt

European Patent Office

Office européen des brevets

(11) Publication number: **0 053 975**

**A1**

## (12) EUROPEAN PATENT APPLICATION

(21) Application number: **81401903.0**

(22) Date of filing: **02.12.81**

(51) Int. Cl.³: **G 09 F 9/35**
**G 02 F 1/133**

(30) Priority: **04.12.80 US 212765**

(43) Date of publication of application:
**16.06.82 Bulletin 82/24**

(84) Designated Contracting States:
**CH DE FR GB IT LI NL SE**

(71) Applicant: SANGAMO WESTON, INC.
180 Technology Drive
Norcross Georgia 30092(US)

(72) Inventor: Bebel, Joseph
16 North Longview Road
Howell New Jersey 07731(US)

(74) Representative: Chareyron, Lucien et al,
Schlumberger Limited 42, rue Saint-Dominique
F-75340 Paris Cedex 07(FR)

(54) Liquid crystal display.

(57) A liquid crystal display (1) operable in both ambient and artificially lighted modes includes an optically clear plate (3), a translucent plate (5), transparent character forming electrodes (11, 13) formed on facing portions of the plates (3, 5), and a liquid crystal material (9) sandwiched between the plates (3, 5). The translucent plate (5) is backlighted by an artificial illumination source (19) when ambient light is insufficient for viewing of the display (1). The translucent plate (5) is preferably formed from a material, such as milk glass, which is nonreactive with the liquid crystal material (9). The translucent plate (5) has a relatively smooth surface which acts as a diffuse reflector of ambient light, while transmitting diffuse artificial lighting when the display (1) is backlit. Since ambient light is reflected only from the upper surface of the translucent plate (5) which is substantially coplanar with the active portion of the display (1), viewing problems due to parallax are eliminated and character contrast is enhanced.

FIG. 1

EP 0 053 975 A1

LIQUID CRYSTAL DISPLAY

BACKGROUND OF THE INVENTION

1. Field of the Invention

The invention relates to the field of liquid crystal displays and, more particularly, to an improved liquid crystal display operable in both ambient and artificially lighted modes.

2. Description of the Prior Art

Liquid crystal displays have become increasingly popular as numeric or alphanumeric diplays for use in a variety of electronic equipment. These displays are charactized by very low power driving requirements and good visibility in bright, ambient lighting conditions.

Liquid crystals used in such displays generally are long rod-shaped organic molecules which contain dipolar functional groups. These crystals exhibit mesomorphism, i.e. a state of matter intermediate between a crystalline solid and a normal isotropic liquid. Three main types of mesomorphic states have been recognized — they are known as the nematic, smectic and cholesteric or twisted nematic mesophases.

The nematic and twisted nematic mesophases are used extensively in current commercial applications. Nematic materials come in two textures, homeotropic, in which the long axes of the molecules are aligned substantially perpendicular to the faces of the display cell, and homogeneous, in which the long axes of the molecules are aligned substantially parallel to the faces of the display cell. Both of these textures possess the optical properties of a positive uniaxial crystal. The texture observed depends on the nature of the compound, the conditions used to obtain the mesophase, and the nature of the supporting surface.

Liquid crystal displays can be divided into two general types. The first is the so-called dynamic scattering mode display. The basic display consists of a parallel plate capacitor with a liquid crystal material acting as the dielectric. The plates are two pieces of glass, each having a thin coating of a transparent conductive material applied thereon, such as tin or indium oxide. The thickness of the active area between the plates is controlled by the use of appropriate polymeric spacers or glass frit materials.

Application of a DC or low-frequency AC signal across the plates changes the material into a milky white liquid. This appearance is due to the creation of scattering centers (turbulence) within the liquid and not to a chemical reaction. When the voltage is removed, the display returns to its transparent state.

In current applications dynamic scattering mode digital displays are made by photoetching a 7-segment electrode pattern to one or both of the plate surfaces. Reflective displays have one of the surfaces coated with a specular metal such as aluminium or a dielectric material such as thorium fluoride. Transmissive displays have etched patterns on both surfaces. In some applications auxiliary edge lighting or backlighting is provided.

The second type of display utilizes the so-called field effect mode of operation. Such displays use the same type of glass cell as described above with respect to dynamic scattering displays. The high resistivity of the material used in field effect displays results in extremely low power consumption and low operating voltages compared to dynamic scattering displays.

One type of field effect display uses a twisted nematic liquid crystal material. In this type of display the long axes of the molecules of liquid crystal material are aligned perpendicular to the faces of the display cell but have their opposite ends twisted by 90$^\circ$ with respect to each other. Application of an external electric field results in an "untwisting" of the molecule and an alignment of the molecules in the direction of the field. If a pair of crossed polarizers are disposed on opposite sides of the cell this electrical untwisting can be used to change the plane of polarization of light passing through the cell to produce a display. In its unenergized state, the polarized light enters the cell, is rotated 90° by the liquid crystal material, and thus passes throught the second polarizer essentially unchanged. When the twist of the liquid crystal material is destroyed by application of an electric field across the liquid crystal cell, however, the linearly polarized light is not rotated and becomes absorbed by the second polarizer. If a 7-segment electrode pattern is photoetched on to the electrode surfaces, a digital display with dark numbers on a light background will result.

However, the use of one or more polarizers with the display cells previously described has a disadvantage in that multiple images ("ghosts") are formed by multiple internal reflections within the display cell due to the differing refractive indices of the polarizers, glass cell plates, and the liquid crystal material itself. These effects become more pronounced as the optical axes of an observer and that of an ambient light source differ by larger degrees. At some viewing angles, these effects due to parallax can become so pronounced that the contrast ratio between the unenergized and energized portions of the display can fall to 1:1.

Another type of field effect mode display is known which eliminates the need for crossed polarizers. This type of display is known as the dichroic type of display. In this type of display, pleochroic dye molecules are added to a liquid crystal material of the twisted nematic type, the dye molecules exhibiting differing light absorptive characteristics depending upon the orientation of their molecular axes. The nematic molecules are twisted by one or more turns between the cell faces in the absence of an applied electrical field. The long axes of the pleochroic dye molecules are aligned with the twisted nematic molecules. In this orientation the dye molecules exhibit relatively high light absorption characteristics and thus present a colored background to an observer of the display. When an external electrical field is applied between the cell faces, the nematic material untwists causing the pleochroic dye also to be reoriented so that the long axes of the dye molecules are aligned substantially perpendicular to the cell faces. In this orientation, the dye exhibits little or no light absorption properties and thus the energized portion of the display appears clear.

In both dynamic mode and field effect mode displays a diffuse reflector is often used behind the display to enhance the display brightness when used under ambient lighting conditions and to reduce the glare associated with specular reflectors. However, such an arrangement does not obviate the problems caused by parallax and multiple internal reflections of light when the display is used under ambient lighting conditions. In order to overcome these problems, it has been proposed to provide the inner surface of the rear cell member with an opaque, diffuse reflective coating. However, such a coating has the disadvantage that it may react over time with either the liquid crystal material or a pleochroic dye, thus shortening the display life. In addition, such coatings must be extremely smooth and free of surface defects in order to ensure uniformity of display performance throughout the active area between the electrodes. Such coatings are expensive to apply and are generally not adaptable to situations where backlighting is needed.

SUMMARY OF THE INVENTION

These and other disadvantages of prior art liquid crystal displays are overcome by the present invention wherein there is provided a liquid crystal display operable in both ambient and artificially lighted modes. The display comprises a first plate formed from substantially optically clear material, and a second plate formed from substantially optically translucent material, with the first and second plates being spaced apart to define a cell. The facing surfaces of the first and second plates further include one or more energizing electrodes formed thereon. A liquid crystal material exhibiting electro-optical properties upon application of a potential to the energizing electrodes is disposed within the cell.

In one embodiment a source of artifical illumination is placed directly behind the translucent plate to backlight the display. In a second embodiment the display includes a reflective layer disposed behind the translucent plate and means for edge lighting the display.

In a third embodiment, a light guide layer is disposed between the translucent plate and the reflective layer for transmitting light provided by illumination means disposed adjacent to an edge of the light guide layer.

The translucent plate preferably is formed from a material, such as milk glass, which is nonreactive with the liquid crystal material or pleochroic dye and which has a white or other optically preceivable color.

The use of a translucent plate also has the advantage that such plates are readily obtainable having at least one relatively smooth surface which can be placed directly into contact with the liquid crystal material and to which the transparent energizing electrodes can be readily applied by coating or photoetching. Further, by placing the translucent surface directly behind the liquid crystal material the problem of parallax inherent in prior art liquid crystal displays is substantially eliminated because the plane from which ambient light is diffusely scattered and relected to an observer and the plane of the active region of the display are substantially coincident. The use of a translucent plate in contact with the liquid crystal material further increases the contrast of the display and enables the display to be used in both ambient and backlighted modes.

The display is simple in construction and low in cost and can be arranged to provide a display having a variety of contrasting characters and background colors through the choice of appropriate pleochroic dyes and the color of the translucent plate.

## BRIEF DESCRIPTION OF THE DRAWING FIGURES

These and other features and advantages of the present invention are described in more detail in the following detailed description of the preferred embodiments and as shown in the accompanying drawing figures wherein:

Fig. 1 is a cross-sectional view of a first embodiment of a liquid crystal display constructed in accordance with the principles of the present invention;

Fig. 2 is a top view of the display shown in Fig. 1;

Fig. 3 is a cross-sectional view of a prior art liquid crystal display;

Fig. 4 is a top view of the prior art display shown in Fig. 3;

Fig. 5 is a cross-sectional view of a second embodiment of a liquid crystal display constructed in accordance with the principles of the present invention; and

Fig. 6 is a cross-sectional view of a third embodiment of a liquid crystal display constructed in accordance with the principles of the present invention.

## DESCRIPTION OF THE PREFERRED EMBODIMENTS

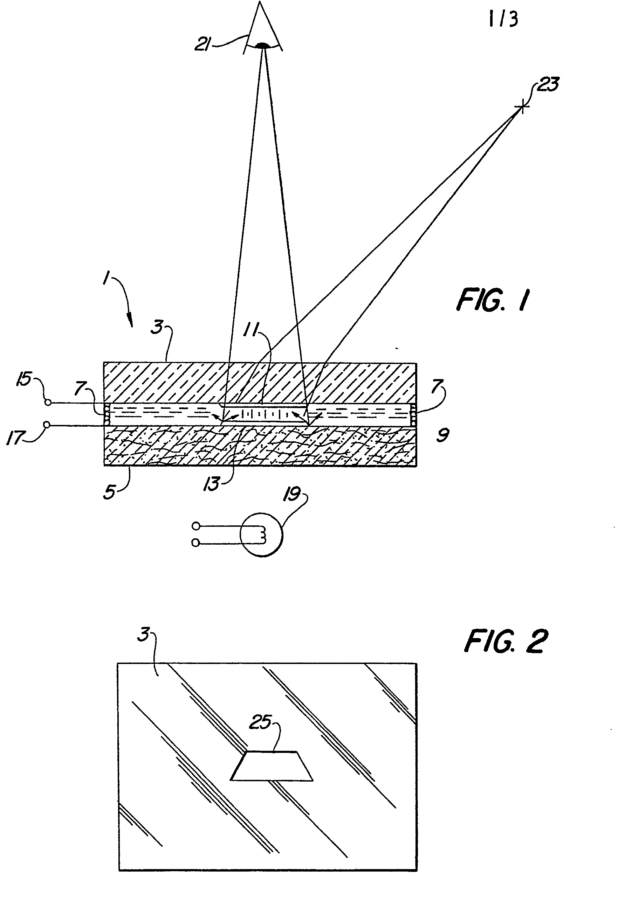

Referring to Fig. 1, there is shown a liquid crystal display 1 comprising a first plate 3 formed from an optically clear material and a second plate 5 formed from an optically translucent material. The two plates 3 and 5 are spaced apart substantially parallel to one another by spacer means 7, such as polymeric spacers or glass frit, to form a sealed cell for a liquid crystal material 9 disposed therein. For clarity, the spacing between plates 3 and 5 is exaggerated in the drawing figures; in actuality the spacing between plates 3 and 5 is on the order of 5-50 microns, with plates 3 and 5 being on the order of 100-1000 microns thick.

The cell further includes at least first and second energizing electrodes 11 and 13 formed respectively on facing portions of plates 3 and 5. Electrodes 11 and 13 preferably are formed from a transparent conductive material such as tin oxide or indium oxide.

Electrodes 11 and 13 are connected to a source of electrical potential (not shown) by respective leads 15 and 17. The source of electrical potential may be alternating current or direct current as is well known in the art.

Also shown in Fig. 1 is a source of artifical illumination 19 which is disposed rearwardly of translucent plate 5 in order to provide backlighting of display 1. An observer 21 and an ambient light source 23 are also shown.

In operation, liquid crystal material 9, which for example is a mixture of twisted nematic material and a pleochroic dye, is disposed between plates 3 and 5. In the unenergized state the ends of the nematic material molecules are twisted by one or more turns between plates 3 and 5. The pleochroic dye molecules are aligned with the pitch of the nematic material and exhibit absorption of light provided by either backlighting source 19 or ambient light source 23. In this state the display will appear to observer 21 to have a uniform milky appearance, with its color being dependent upon the pleochroic dye utilized.

When an electrical potential is applied to leads 15 and 17 an electric field is produced between electrodes 11 and 13 causing the nematic material between the electrodes to untwist and its molecules to become aligned substantially perpendicular to the faces of plates 3 and 5. The pleochroic dye molecules also rotate to remain aligned with the nematic material molecules. In this state, the pleochroic dye exhibits little or no absorption of light. Thus the energized liquid crystal/pleochroic dye mixture between the two energized electrodes will appear substantially clear to observer 21 and the observer will see a character segment 25 composed of the exposed surface of translucent plate 5 which is directly below electrodes 11 and 13, as shown in Fig. 2.

Translucent plate 5 preferably is formed from a material which is nonreactive with both the twisted nematic liquid crystal material and the pleochroic dye. One example of such a material is milk glass. Such a material has the advantage that it can be readily obtained with at least one smooth surface, which can be placed directly in contact with liquid crystal material 9 and to which energizing electrodes 11 and 13 can be readily applied with little or no surface preparation. Milk glass can be obtained in a variety of colors other than white so that a display having a desired colored background can be readily obtained. Of course, materials other than milk glass can be used for plate 5 so long as they possess the desired characteristics of translucence, surface smoothness, and nonreactivity with the liquid crystal material.

The arrangement of Fig. 1 has the further advantage of requiring only two components, plates 3 and 5, to form the liquid crystal display cell. With the addition of illumination source 19 the display is operable both in ambient lighted and backlighted modes.

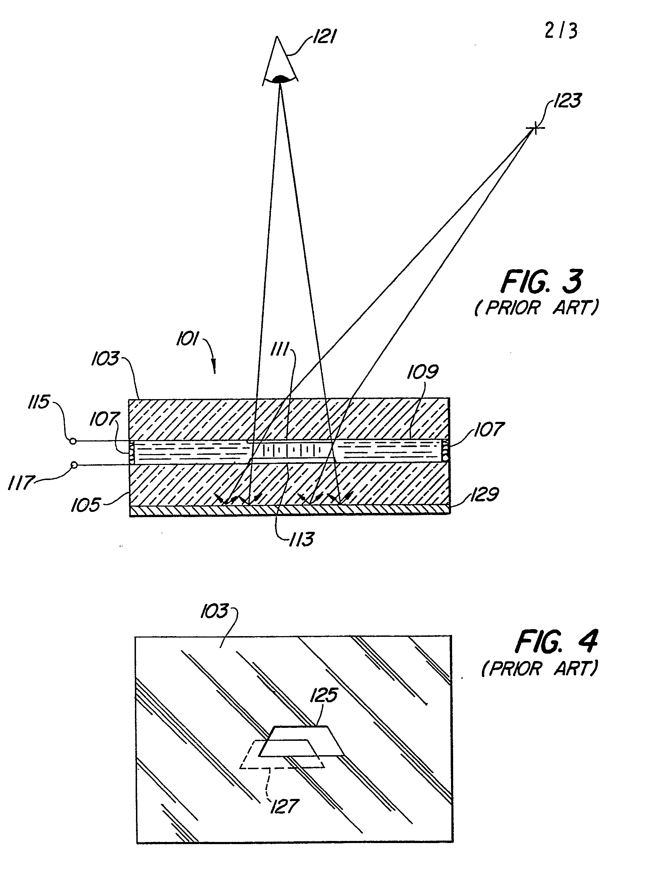

Aside from its simplicity, the arrangement of the present invention advantageously eliminates problems due to parallax and multiple internal reflections inherent in prior art displays, such as that shown in Figs. 3 and 4.

In Figs. 3 and 4 a prior art liquid crystal display 101 is shown comprising first and second optically clear plates 103 and 105 which are spaced apart substantially parallel to one another and sealed by spacer means 107 to form a cell for containing a liquid crystal material 109 therein. The display further includes at least first and second transparent conductive electrodes 111 and 113 formed on facing portions of respective plates 103 and 105 the electrodes being connected to a source of electrical potential (not shown) by means of respective leads 115 and 117. The display 101 may further include a specular or diffuse reflector 129 mounted on the rearward portion of plate 105 for use under ambient lighting conditions. Alternatively, reflector 129 can be made semi-transparent for use with a source of backlighting when ambient lighting does not provide sufficient contrast for good display visibility.

However, such a prior art arrangement suffers from the disadvantage that if the viewing axes of a observer 121 and the ambient light source 123 differ, as shown in Fig. 3, parallax is produced and a double or "ghost" image 127 of the energized segment 125 will be seen by the observer, as shown in Fig. 4. This double image is caused by the light originating from the source 123 being refracted in its passage through plates 103 and 105, liquid crystal material 109, and reflecting from reflector 129 back through the cell. Unless the optical axes of observer 121 and light source 123 substantially coincide, there will be an apparent offset between the actual and the refracted images (parallax) as seen by observer 121. Parallax is not as severe when the display is backlighted since light need only traverse the cell once, but there will still appear to be some ghosting at certains angles of viewing by the observer due to refraction in plate 105. In addition, in reflective displays contrast is substantially reduced since ambient light must pass through at least six optical interfaces in traversing display 101 and reflecting back to observer 121. This problem can be obviated somewhat through the use of anti-reflection coatings for the optical surfaces. However, this solution is not always practical because anti-reflection coatings frequently are reactive with the liquid crystal material.

These problems of prior art displays are substantially overcome by the arrangement shown in Fig. 1 in which translucent plate 5 forms the rear surface of the display cell. No "ghost" or double image is formed due to parallax because the plane from which ambient light or backlighting is diffusely scattered and/or reflected to observer 21 and the plane of the active region of the liquid crystal material between electrode 11 and 13 are substantially coincident. In addition, contrast is increased because the diffuse reflective surface of plate 5 is brought as close as possible to the character forming region between electrodes 11 and 13, and because ambient light has two fewer interfaces to traverse compared to prior art arrangements.

Contrast is also improved in the backlighting mode by the present invention in that an energized character segment will appear to be illuminated from directly behind the energized area between electrodes 11 and 13 rather than through an additional optically clear plate which can produce distortion due to refraction or multiple internal reflections as used in the prior art.

The use of a translucent plate for the rear portion of the display cell eliminates the need for a semi-transparent reflector when the display is to be used in both ambient and backlighted modes. This results in a thinner, less expensive, and easier to manufacture display which is adaptable to a variety of lighting conditions. Further, by judicious choice of colors for the translucent plate and for the pleochroic dye used with the liquid crystal material, a display exhibiting almost any contrasting combination of colored characters on a colored background field can be provided.

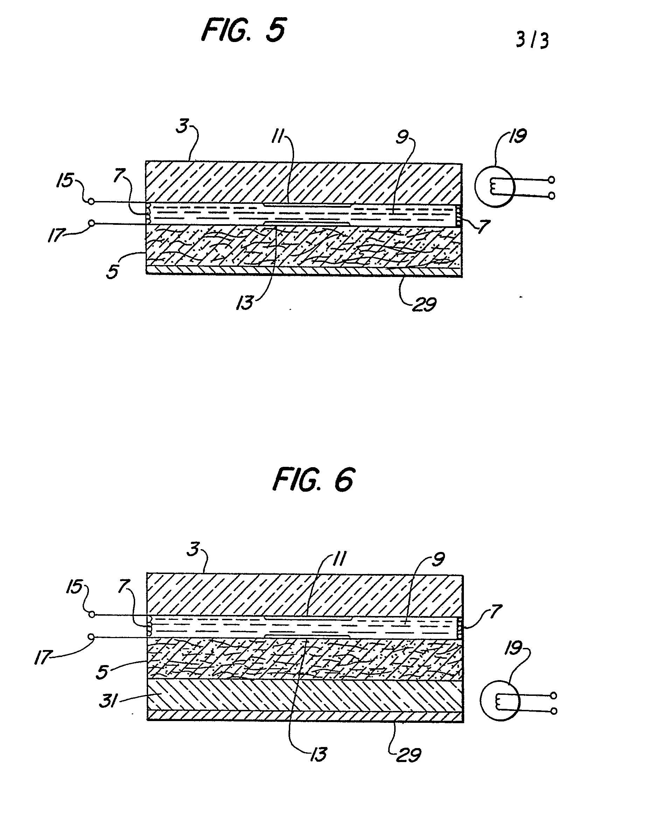

Figs. 5 and 6 illustrate two additional embodiments of the present invention. The embodiment of Fig. 5 is similar to that shown in Fig. 1 with the addition of a specular or diffuse reflective layer or coating 29 applied to the rear surface of translucent plate 5. Illumination source 19 is arranged to illuminate the edge of optically clear plate 3. This provides an edge-lighted display of medium contrast. Reflective layer 29 acts to trap light which is diffused by plate 5 and helps to increase the overall contrast of the display, but is not absolutely necessary for the operation of this embodiment.

Fig. 6 shows another form of the invention wherein an optically clear plate 31 is mounted directly to the rear surface of

0053975

translucent plate 5. Clear plate 31 further includes a specular or diffuse reflective layer or coating 29 applied to its exposed rear surface. Illumination source 19 is arranged to illuminate the edge of clear plate 31, which acts as a light guide or pipe for uniformly backlighting the display through translucent plate 5. This embodiment is especially useful in situations where there is no room directly behind the display for illumination source 19.

Although the present invention has been described in considerable detail is it understood that various changes and modifications will occur to those skilled in the art. For example, while the invention has been described with respect to twisted nematic-pleochroic dye field effect displays, it is understood that this display is readily adaptable for use with other types of liquid crystal materials exhibiting the guest-host effect, field induced birefringence, cholesteric-to-nematic transition, or dynamic mode scattering effects and both homeotropic and homogeneous types of liquid crystal materials. There is no requirement that illumination source 19 be placed directly behind the display (Fig. 1) or at the edge of the display (Figs. 5 and 6). For example, light from source 19 can be directed to illuminate the display by means of mirrors, lenses, fiber optics, etc. or any combination thereof.

The foregoing description is not intended to be limitive or exhaustive but rather illustrative of the invention which is defined by the appended claims.

What is claimed is:

1. A liquid crystal display operable in both ambient and artificially lighted modes comprising:

a first plate formed from substantially optically clear material;

a second plate;

said first and second plates spaced apart and defining a cell, the facing surfaces of said first and second plates further including one or more substantially optically clear energizing electrodes formed thereon; and ·

a liquid crystal material exhibiting electro-optical properties upon application of a potential to said energizing electrodes disposed within said cell and characterized by:

said second plate being formed from substantially optically translucent material.

2. The display of claim 1 characterized in that said second plate is formed from milk glass.

3. The display according to claim 1 or 2 characterized by including means for backlighting said display.

4. The display according to claim 1 or 2 characterized by means for edge lighting said display.

5. The display of claim 4 characterized by a reflective layer disposed on the surface of said second plate which is not in contact with said liquid crystal material.

6. The display of claim 5 characterized by a plate formed of substantially optically clear material disposed between said translucent plate and said reflective layer for transmitting light provided by said edge lighting means disposed adjacent to an edge of said optically clear plate, whereby said display is uniformly backlighted through said translucent plate.

FIG. 1

FIG. 2

*121*

*123*

*FIG. 3*
*(PRIOR ART)*

*101*

*103*

*115*

*111*

*107*

*109*

*107*

*117*

*105*

*129*

*113*

*103*

*FIG. 4*
*(PRIOR ART)*

*125*

*127*

## FIG. 5

## FIG. 6

European Patent Office

**EUROPEAN SEARCH REPORT**

Application number

EP 81 40 1903.0

| | DOCUMENTS CONSIDERED TO BE RELEVANT | | CLASSIFICATION OF THE APPLICATION (Int. Cl. 3) |
|---|---|---|---|
| Category | Citation of document with indication, where appropriate, of relevant passages | Relevant to claim | |
| Y | Patent Abstracts of Japan Vol. 4, No. 70, 23 May 1980 page 131P12 & JP - A - 55 - 38547 -- | 1,2 | G 09 F 9/35 G 02 F 1/133 |
| Y | DE - A1 - 2 813 007 (EBAUCHES S.A.) * page 12, paragraph 3; fig. 7, 8 * -- | 1,3,5, 6 | |
| A | GB - A - 2 028 528 (TIMEX CORP.) * page 1, lines 77 to 110 * -- | 1,3,5, 6 | **TECHNICAL FIELDS SEARCHED (Int.Cl.3)** |
| A | Patent Abstracts of Japan Vol. 2, No. 40, 16 March 1978 page 202E78 & JP - A - 53 - 4494 ---- | 3,4 | G 02 F 1/13 G 02 F 1/133 G 02 F 1/137 G 09 F 9/00 G 09 F 9/30 G 09 F 9/35 |

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

The present search report has been drawn up for all claims

| Place of search | Date of completion of the search | Examiner |
|---|---|---|
| Berlin | 18-02-1982 | BOTTERILL |

EPO Form 1503.1   08.78